# EUROPEAN PATENT APPLICATION

(11) **EP 1 341 103 A1**
(43) Date of publication of application: **03.09.2003**
(21) Application number: 01972590.2
(22) Date of filing: 28.09.2001
(51) Int. Cl.: G06F 17/60

(54) **METHOD AND SYSTEM FOR SELLING INDIVIDUAL INFORMATION DISPLAY PRODUCT**

(30) Priority: 04.10.2000 JP 2000304370; 04.10.2000 JP 2000304369
(71) Applicant: BROTHER KOGYO KABUSHIKI KAISHA, Nagoya-shi, Aichi-ken 467-8561 (JP)
(72) Inventor: FUWA, Tetsuji, c/o BROTHER KOGYO KABUSHIKI KAISHA, Nagoya-shi, Aichi 467-8561 (JP)
(74) Representative: Hofer, Dorothea, Dipl.-Phys.
(86) International application number: JP0108549
(87) International publication number: WO02029657

(57) **Abstract**

When purchasers buy stamps, business cards, and other products that indicate unique information over a transmission network such as the Internet, the purchasers can first confirm the finished condition of the product and then order the products with peace of mind and little effort. When an order is received for a stamp, customer information is extracted from a customer database 7 based on an ID transmitted from a customer computer 20. A preview preparation portion 5a prepares a preview image of the ordered stamp using the extracted information. The prepared preview image is transmitted to the customer computer 20 and displayed on the browser 21.

## Description

### TECHNICAL FIELD

The present invention relates to a method of selling unique information indicating products, a system for selling unique information indicating product, and a server used to sell unique information indicating products.

### BACKGROUND ART

Recently, in association with developments in computer network technology, of which the Internet is a representative example, e-commerce transactions using graphic-user interfaces (GUI) over the world-wide web (WWW), especially "mail-order" business between retail businesses and consumers, is booming. By using the WWW for "mail order" transactions, purchasers benefit because they can view sample images of many products using a browser to confirm the nature of products, and buy products quickly with peace of mind. Businesses benefit because they can receive orders cheaply from a broad geographic range of customers.

Some products are formed or are printed with unique information about an individual or a company. Examples of such products include ink stamps or business cards. Examples of the unique information formed or printed on these products include an individual's or company's name, address, post office number, telephone number, or email address. Individual products become more unique the more information is indicated on the product to be ordered.

Accordingly, when selling stamps, cards and the like over the Internet, the purchaser cannot use the browser to confirm the image of the product showing he actual desired characters. The customer can only imagine what the final condition of the product actually ordered will be by looking at the sample images of the product having similar layout. This is very inconvenient to the customer.

For example, even if the number of characters included in the sample image displayed using the browser greatly differs from the number of characters included in the product to be purchased, then characters that the customer intended to be aligned in a single row may be displayed across two rows in the actual product. The number of rows in the actual product would differ from the number of rows displaying characters in the sample image. For this reason, customers would feel insecure when making a purchase of stamps, business cards, and the like over the Internet. This is a great obstacle in attempts to sell, over the Internet, stamps, business cards, and other products that indicate unique information.

It is an objective of the present invention to provide a sales method, sales system, and server used for selling unique information indicating products, such as a stamp or business cards, that enables a purchaser to confirm what an actual information indicating product will look like before purchasing it, so that the purchaser can order such products over the Internet or other transmission network without worry.

### DISCLOSURE OF THE INVENTION

In order to achieve the above-described objectives, the present invention provides a sales method for selling, using a transmission network, unique information indicating products that indicate unique information. The sales method includes preparing, based on unique information from a client device across the transmission network to a server, a preview image of a unique information indicating product that indicates the unique information; transmitting the prepared preview image to the client device; and displaying the preview image using a browser of the client device.

The present invention also provides a sales system for selling, over a transmission network, unique information indicating products that indicate unique information. The sales system includes a client device and a server connected via a transmission network, wherein: the server prepares, based on unique information supplied from the client device across the transmission network, a preview image of a unique information indicating product that indicates the unique information and transmits the prepared preview image to the client device; and the client device includes a browser that displays the preview image from the server on a browser.

The present invention also provides a server used to sell, over a transmission network, unique information indicating products that indicate unique information. The server includes a preview image preparation means that prepares, based on unique information supplied over the transmission network from a client device, a preview image of a unique information indicating product that indicates the unique information; and a transmission means that transmits the prepared preview image to the client device.

The above-described sales method, sales system, and server enable a purchaser of unique information indicating products to decide to purchase a unique information indicating product after confirming the preview image displayed by operation of the browser. Therefore, products that do not match the purchaser's imagined understanding of the product will not be produced. This greatly improves the convenience of making purchases using the Internet.

It is desirable that in the above-described sales method, sales system, and server, preparation of the preview image of the unique information indicating product and display on the browser of the client device (in the case of the server, transmission to the client device) be performed in real time in response to character input performed at the client device for the unique information. By this, the preview images are displayed on the browser in real time. Therefore, the purchaser can automatically confirm the preview images in accordance with character input by the purchaser. This is particularly effective when transmission between the server and client device is at a fast transmission speed.

It is desirable that in the above-described sales method, sales system, and server, preparation of the preview image of the unique information indicating product and display on the browser of the client device (in the case of the server, transmission to the client device) be performed in response to a preview reception request sent from the client device to the server. By this, preview images are prepared and displayed in response to a preview reception request from the client. Therefore, data transmission with the server in order to display the preview image is performed only once after the unique information has been completely input. Even if the server and the client are connected by a connection with a slow transmission speed, not much time is required for transmitting data from the server to the client.

It is desirable that in the above-described sales method, the browser of the client device displays a plurality of preview images corresponding to different colors, text fonts, or sizes selectable as products. By this, a plurality of unique information indicating products can be displayed in different colors, fonts, or sizes. Therefore the purchaser can more reliably confirm the unique information indicating product before purchasing it.

It is desirable that in the above-described sales method, the browser of the client device display preview images corresponding to different types of unique information indicating products selectable as products. By this, different types of unique information indicating products can be displayed. Therefore, this urges the purchaser to purchase different types of unique information indicating products, thereby promoting sales of the unique information indicating products.

It is desirable that in the above-described sales method, the unique information include a customer identifier and the step of preparing the preview image include extracting, based on a customer identifier supplied from the client device, over the transmission network, to the server, unique information from a customer database that stores customer identifiers in correspondence with customer information, the unique information being for displaying the unique information indicating product, and displaying the extracted unique information in the preview image of the unique information display product. It is desirable that in the above-described sales system, the unique information including a customer identifier; extracting, based on a customer identifier supplied from the client device, over the transmission network, to the server, unique information from a customer database that stores customer identifiers in correspondence with customer information, the unique information being for displaying the unique information indicating product; preparing the preview image of the unique information indicating product indicating the unique information extracted from the customer database; and transmitting the prepared preview image to the client device and displaying it on the browser of the client device. It is desirable that in the above-described server, the unique information include a customer identifier; a customer database store customer identifiers in correspondence with customer information; a unique information extracting means be provided that extracts, from the customer database, unique information to be indicated on the unique information indicating product, based on a customer identifier supplied from a client device over the transmission network; and the preview image preparation means preparing the preview image of the unique information indicating product to indicate the unique information extracted from the customer database.

With this configuration, when a customer identifier is input, a preview image of a unique information indicating product that indicates unique information is displayed by operation of the browser. This reduces the number of characters that the customer needs to input when purchasing a unique information indicating product and reduces the labor of the customer. In the above-described the sales method and sales system, it is desirable that a customer identifier and a preview image of the unique information product indicating the unique information be prepared when unique information to be indicated on the unique information indicating product is supplied from the client device over the transmission network to the server, but a customer identifier is not supplied; and to transmit the prepared preview image and the customer identifier to the client device.

It is desirable that in the above-described server, a customer identification preparation means be further provided that prepares a customer identifier stored in the customer database when unique information indicated on the unique information indicating product is supplied over the transmission network but a customer identifier is not supplied; the preview image preparation means prepare the preview image of the unique information indicating product to indicate unique information when unique information to be indicated on the unique information indicating product is supplied over the transmission network from a client device; and the transmission means transmit the preview image and the customer identifier to the client device. With such a sales method, sales system, and server, customer identifiers can be issued and notified to the customer. This makes it easier for the customer to make a purchase the next time.

The present invention further provides, in a unique information indicating product sales method for selling, using a transmission network, unique information indicating products that indicate unique information, a unique information indicating product sales method wherein, based on a customer identifier supplied from a client device over the transmission network to a server, past order information associated with the customer identifier is extracted from a customer database that stores customer identifiers in correspondence with customer information; based on the past order information extracted from the database, a review image of a unique information indicating product ordered in the past is prepared; and the prepared review image to the client device is transmitted and the review image is displayed on a browser of the client device.

The present invention provides, in a unique information indicating product sales system for selling, using a transmission network, unique information indicating products that indicate unique information, a unique information indicating product sales system configured such that a client device and a server are connected via a transmission network; information about past orders associated with the customer identifier is extracted from a customer database that stores customer identifiers in correspondence with customer information based on a customer identifier supplied from the client device to the server across the transmission network; a review image of a unique information indicating product ordered by a customer in the past is prepared based on the information about past orders extracted from the database; and the prepared review image is transmitted to the client device and displayed on a browser of the client device.

The present invention provides, in a server used to sell unique information indicating products for selling, over a transmission network, unique information indicating products that indicate unique information, a server used to sell unique information indicating products provided with: a customer database storing customer identifiers in correspondence with customer information; an order information extracting means that extracts, from the customer database, information about past orders associated with a customer identifier supplied from a client device over the transmission network; a review image preparation means that, based on the past order information extracted from the customer database, prepares a review image of a unique information indicating product ordered in the past by a customer; and a transmission means that transmits the prepared review image to the client device.

The sales method, system, and server enables the browser to display, based on information of a past order, a review image of a unique information indicating product that the customer ordered in the past. Therefore, the customer can determine content of a new product while referring to the layout of a product he or she has purchased in the past.

It is desirable that in the above-described sales method and the sales system, the review image be transmitted, along with at least one of a sample image of a unique information indicating product and a preview image of a unique information indicating product indicating unique information extracted from the customer database, to the client device and displayed on the browser of the client device. It is desirable that in the above-described server, the transmission means transmit, to the client device, the review image and at least one of a sample image of a unique information indicating product and a preview image of a unique information indicating product indicating unique information extracted from the customer database.

With such a sales method, sales system, and server, the review image, the sample image, and/or the preview image of the unique information indicating product is displayed on the browser. Therefore, the customer can easily determine content of products before he or she makes a new purchase.

A unique information indicating product sales method according to a third aspect of the present invention includes using at least one of order information for a unique information indicating product and unique information to be indicated on the unique information indicating product as corresponding information in another one of the at least one of the order information and the unique information.

The present invention further provides, in a unique information indicating product sales method for selling, using a transmission network, unique information indicating products that indicate unique information, a unique information indicating product sales method wherein: order information for a unique information indicating product is used as unique information correspondence information for unique information to be indicated on the unique information indicating product or unique information to be indicated on the unique information indicating product is used as unique information correspondence information for order information.

The present invention also provides, in a unique information indicating product sales system for selling, using a transmission network, unique information indicating products that indicate unique information, a unique information indicating product sales system is configured such that: a client device and a server are connected via a transmission network; and order information for a unique information indicating product is as unique information correspondence information for unique information to be indicated on the unique information indicating product or unique information to be indicated on the unique information indicating product is used as unique information correspondence information for order information.

The present invention also provides, in a server used to sell unique information indicating products for selling, over a transmission network, unique information indicating products that indicate unique information, a server used to sell unique information indicating products that uses order information for a unique information indicating product as unique information correspondence information for unique information to be indicated on the unique information indicating product or using unique information to be indicated on the unique information indicating product as unique information correspondence information for order information.

According to the sales method, system, and server, the unique information correspondence information in the order information about a unique information indicating product and the unique information to be indicated on a unique information indicating product can be used interchangeably. Therefore, there is no need for the customer to input redundant information. There will be fewer mistakes when inputting data.

It is desirable that in the above-described sales method, sales system, and server, a portion of the unique information correspondence information in the order information for a unique information indicating product be used as at least one of another portion of unique information correspondence information of the order information and the unique information to be displayed on the unique information indicating product. Because a portion of the unique information correspondence information in the order information about a unique information indicating product can be used as another portion, the user does not need to input redundant information.

The present invention further provides, in a unique information indicating product sales method for selling, using a transmission network, unique information indicating products that indicate unique information, a unique information indicating product sales method such that: a preview image is prepared of a unique information indicating product that indicates unique information that was extracted, based on a customer identifier, from a customer database that stores customer identifiers in correspondence with customer information; and the prepared preview image is transmitted in an email message to an email address associated with the customer identifier.

The present invention also provides, in a unique information indicating product sales system for selling, using a transmission network, unique information indicating products that indicate unique information, a unique information indicating product sales system such that: a client device and a server are connected via a transmission network; a preview image is prepared of a unique information indicating product that indicates unique information extracted, based on a customer identifier, from a customer database that stores customer identifiers in correspondence with customer information; and the prepared preview image is transmitted as an email message to an email address associated with the customer identifier.

The present invention also provides, in a server used to sell unique information indicating products for selling, over a transmission network, unique information indicating products that indicate unique information, a server used to sell unique information indicating products provided with: a customer database storing customer identifiers in correspondence with customer information; a preview image preparation means that prepares a preview image of a unique information indicating product that indicates unique information extracted based on a customer identifier stored in the customer database; and an email message transmission means that transmits, as an email message, the prepared preview image to an email address corresponding to one of the customer identifiers.

According to such a sales method, sales system, and server, the preview image of a newly designed unique information indicating product is sent as an email message to the email address of a customer stored in the customer database, thereby stimulating the customer desire to make a purchase and increasing demand of the unique information indicating products. Also, there is the merit to the customer that a purchase can be completed by merely returning the email message to the sender.

According to the present invention, "unique information" includes a variety of information, such as names, addresses, telephone numbers, and email addresses of individuals or groups of individual, such as companies, and also creative text, catch phrases, or other combinations of symbols that have a particular meaning. According to the present invention, "unique information indicating products" include stamps, business cards, tags, labels, and stickers.

Also, any well-known networks such as the Internet, a LANs, or a WAN may be used as the "transmission network" in the present invention. It should be noted that according to the present invention, the "server" can be a single computer that performs all functions, or a plurality of computers with functions divided therebetween. Also, "character input" includes addition and erasure of alphanumeric characters, and also conversion of input Roman or Japanese *kana* characters into Chinese characters such as Japanese *kanji*.

Merely as single preview image may be prepared. A variety of different types of preview images may be prepared as sample images. Also, "customer information" includes at least one of a customer's personal information (name, address, telephone number, and email address) and order information (dates when products were ordered, information about the addressee, number of products ordered, type of product ordered, unique information that is indicated by the product) about past orders of unique information indicating products.

Also, "unique information extracted from the customer database to be indicated on the unique information indicating product" may be personal information about the customer and may be information about the addressee or unique information indicated on a product that was ordered in the past.

### BRIEF DESCRIPTION OF THE DRAWINGS

Fig. 1 is a block diagram of a stamp sales system according to an embodiment of the present invention;
Fig. 2 is a chart representing content of a customer database shown in Fig. 1;
Fig. 3 is a flowchart indicating a stamp sales method according to an embodiment of the present invention from the server operation point of view;
Fig. 4 is a flowchart indicating a stamp sales method according to an embodiment of the present invention from the server operation point of view;
Fig. 5 is a flowchart indicating a stamp sales method according to an embodiment of the present invention from the server operation point of view;
Fig. 6 is a view representing an example of a screen displayed by a browser at a client device during various stages of the stamp sales method according to the embodiment of the present invention;
Fig. 7 is a view representing an example of a screen displayed by a browser at a client device during various stages of the stamp sales method according to the embodiment of the present invention;
Fig. 8 is a view representing an example of a screen displayed by a browser at a client device during various stages of the stamp sales method according to the embodiment of the present invention;
Fig. 9 is a view representing an example of a screen displayed by a browser at a client device during various stages of the stamp sales method according to the embodiment of the present invention;
Fig. 10 is a flowchart indicating a stamp sales method according to a modification of the embodiment of the present invention from the server operation point of view;
Fig. 11 is a view representing an example of a screen displayed by the browser of the client device during various stages for inputting stamp face information according to the stamp sales method of the modification of Fig. 10;
Fig. 12 is a flowchart indicating a stamp sales method according to another modification of the embodiment of the present invention from the server operation point of view;
Fig. 13 is a flowchart indicating a stamp sales method by direct mail according to an embodiment of the present invention from the server operation point of view;
Fig. 14 is a view showing a screen displayed by a mailer in the client device according to an embodiment.

### BEST MODE FOR CARRYING OUT THE INVENTION

Next a preferable embodiment of the present invention will be described with reference to the drawings.

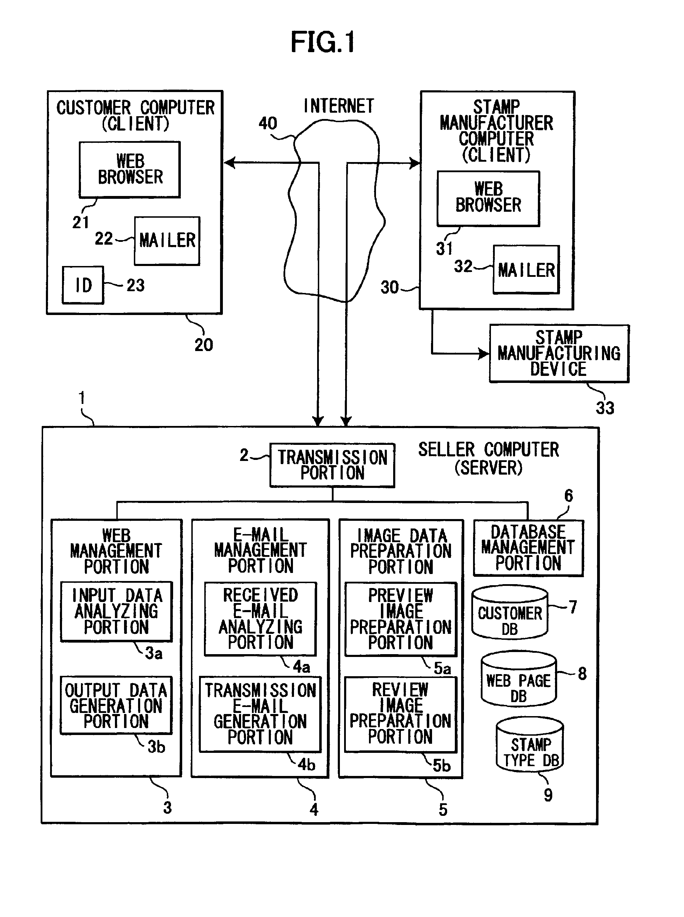

Fig. 1 is a block diagram showing a stamp sales system according to an embodiment of the present invention. The system is for selling stamps and includes computers 1, 20, 30, all connected together by the Internet 40 so as to be capable of mutual transmission of data. The computer 1 functions as a server of the seller of the stamps. The computers 20 and 30 are client devices of the computer 1. The computer 20 belongs to a customer who wishes to buy a stamp. The manufacture computer 30 belongs to a stamp manufacturer. It should be noted that although Fig. 1 shows only one of each of the client devices 20, 30, all computers connected to the Internet are potential client devices in this embodiment.

The server computer 1 includes a transmission portion 2, a web management portion 3, a mail management portion 4, an image data preparation portion 5, a database management portion 6, a customer database 7, a web page database 8, and a stamp type database 9. The transmission portion 2 is for performing transmission and reception of data with the computers 20, 30 using protocol that conforms with the Internet 40.

The web management portion 3 is for managing transmission to and reception from a web page over the Internet using hyper text transfer protocol (HTTP). The web page is written in hyper text markup language (HTML). The web management portion 3 includes an input data analyzing portion 3a and an output data generation portion 3b. The input data analyzing portion 3a analyzes the content of data supplied, based on HTTP, over the Internet 40 through the transmission portion 2. The output data generation portion 3b generates HTML data in accordance with the analysis results of the input data analyzing portion 3a. The transmission portion 2 transmits the HTML data based on HTTP for supply to the computers 20, 30.

The mail management portion 4 is for managing transmission of email messages over the internet 40 using a simple mail transfer protocol (SMTP) and reception of email messages using post office protocol (POP). The email messages are written as text data, HTML, or both. The mail management portion 4 includes a received email analyzing portion 4a and a transmission mail generation portion 4b. The received email analyzing portion 4a analyzes the content of email messages supplied, based on POP, over the Internet from the transmission portion 2 to the mail management portion 4. The transmission email generation portion 4b generates email messages that the transmission portion 2 supplies to the computers 20, 30 based on SMTP.

The image data preparation portion 5 prepares preview images of stamp faces and data of the preview images and includes a preview image preparation portion 5a and a review image preparation portion 5b. The preview image preparation portion 5a prepares unique sample images when an ID is input. Each unique sample image is a preview image of a different stamp type indicating name and address about the customer that corresponds to the ID. The preview image preparation portion 5a prepares a preview image upon receiving a request for a preview image from the computer 20. The preview image shows a stamp face to be ordered. It should be noted that, as will be described later in a modification of the embodiment, the preview image preparation portion 5a may prepare preview images in real time in response to text input of stamp face content at the computer 20. The review image preparation portion 5b prepares a review image when a customer with an ID registered in the customer database 7 places an order for a stamp. The review image shows a stamp face that was ordered by a customer in the past.

The database management portion 6 is for managing the three databases 7, 8, and 9. The database management portion 6 extracts necessary data from the customer database 7, the web page database 8, and the stamp type database 9 and also controls rewrite operations of the databases 7, 8, and 9. The database management portion 6 also prepares an ID for those customers who do not have an ID when placing an order, and writes the ID in the customer database 7.

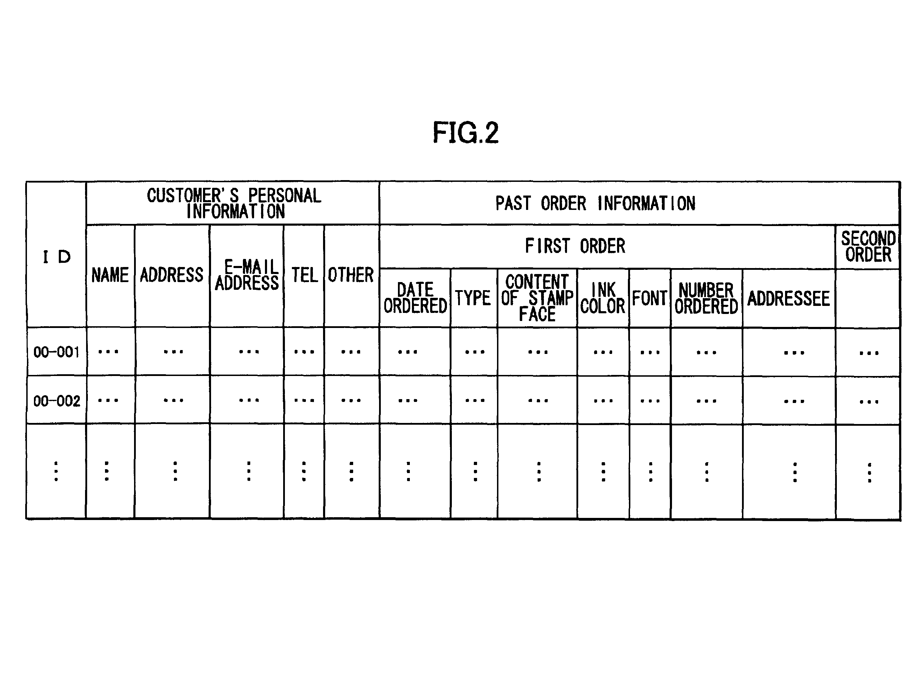

The customer database 7 records information, such as a customer identification number (ID), about customers with a past purchasing history. As shown in Fig. 2, the customer database 7 stores information relating to customers in association with IDs, which serve as unique identifiers for each customer. The information relating to customers includes personal information and past order information. The personal information relates to the customer him- or herself, such as name, address, email address, and telephone number of the customer. The past order information elates to stamps a customer ordered in the past such as the date each order was placed, type of stamp ordered, content of text rows on the ordered stamp face, ink color, font, number of stamps ordered, and addressee information for each order.

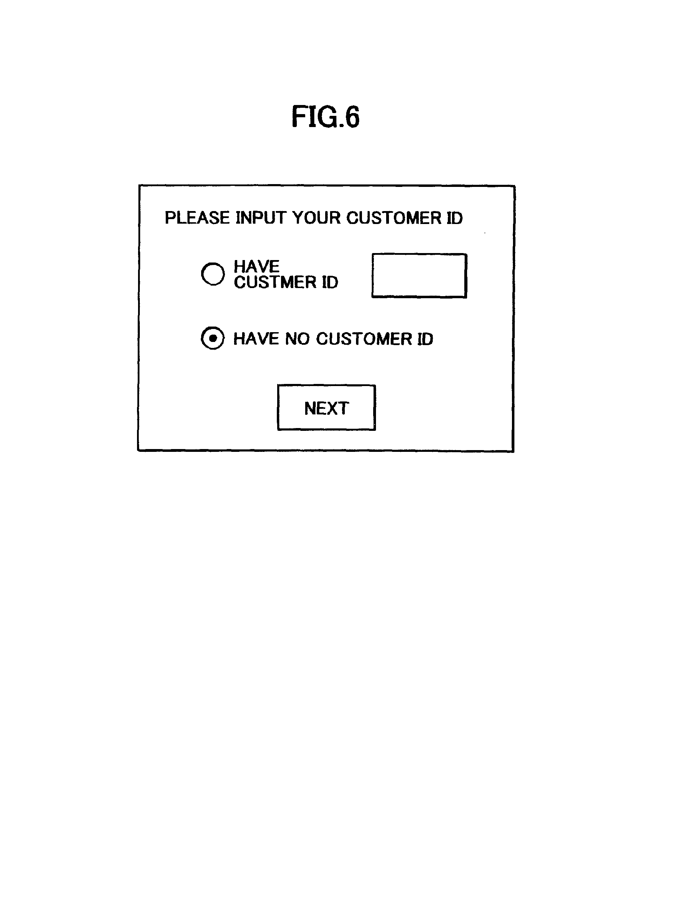

The web page database 8 records web page HTML files, including email files, that are for transmission to the computers 20, 30. The web page database 8 stores HTML files to be transmitted to the computer 20, HTML files and email files to be transmitted to the manufacturer manufacture computer 30, and email files to be transmitted to the computer 20. The HTML files transmitted to the computer 20 are for different stages of the stamp ordering process, whereupon they are displayed by the browser for example as shown in Figs. 6 to 9. The email files to be transmitted to the computer 20 are for when performing direct mail sales.

The stamp type database 9 stores files relating to layout of each type of stamp. The stamp type database 9 stores the name of predetermined stamp types in correspondence with the layout. Examples of stamp type names include A-02, A-03, and the like. The layout is the design of the stamp face and includes the size of the stamp face overall and the position of lines that divide character position regions in the stamp face. The stamp type database 9 also stores sample images. The sample images show how the stamp face ordinarily appears with a pre-prepared and fixed stamp face.

The computer 20 is installed with a browser 21, which is Web viewing software, and a mailer 22, which is email transmission and reception software. It should be noted that when a user of the computer 20 purchased a stamp from the server computer 1 in the past, the server 1 sends an HTML file or an email file with the ID to the computer 20. The computer 20 stores an HTML file 23 (sent from the computer 1) or email file with the customer ID.

The manufacturer computer 30 is installed with a browser 31, which is Web viewing software, and a mailer 32, which is email transmission and reception software. The manufacturer computer 30 is connected to a stamp manufacturing device 33 capable of producing a stamp having a stamp face based on an image file transmitted from an external source. As a result, the stamp manufacturing device 33 can produce stamps using data transmitted from the server computer 1 by operating the manufacturer computer 30.

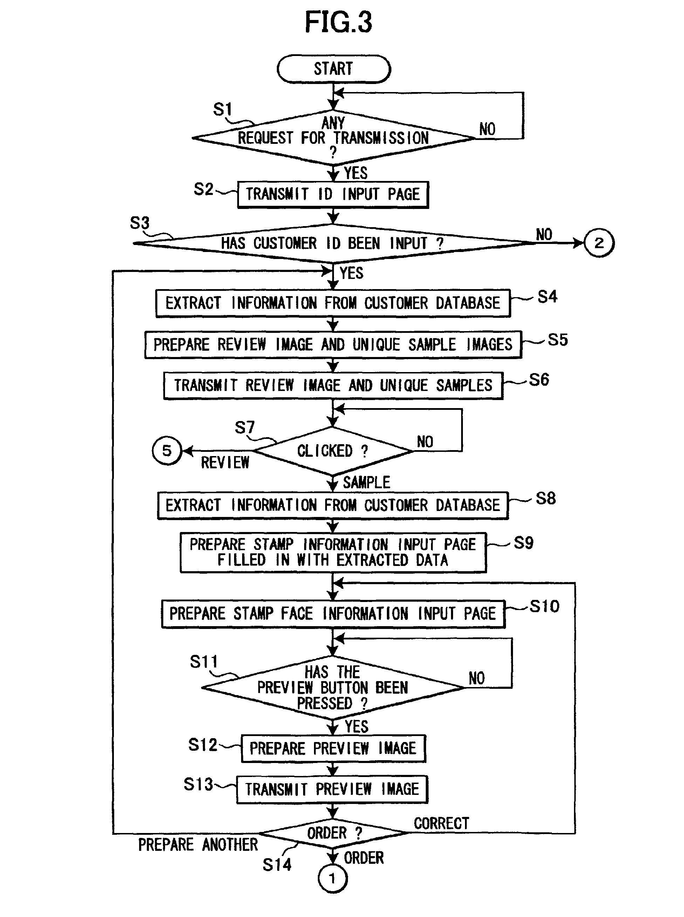

Next, a stamp sales method according to the present embodiment will be described while referring to Figs. 3 to 9. Figs. 3 to 5 are flowcharts indicating the stamp sales method according to the embodiment from the server operation point of view. Figs. 6 to 9 are views showing examples of screens displayed using the browser of the computer at various stages of the stamp sales method according to the embodiment.

In the stamp sales method according to the embodiment, first, in S1 of Fig. 3 the input data analyzing portion 3a of the web management portion 3 repeatedly judges whether a request for transmission of a web page for inputting an ID has been received from the client device. When there is a request (S1:YES), then the program proceeds to S2. In S2, the database management portion 6 retrieves a file from the web database. The file is used by the browser 21 of the computer 20 to display the ID input screen shown in Fig. 6. The transmission portion 2 transmits the file to the computer 20. It should be noted that the ID input screen may require input of a password in addition to the ID. In this case, passwords would also be stored in the customer database in correspondence with each ID.

In S3, the input data analyzing portion 3a judges whether or not an ID has been input at the computer 20 and the customer ID has been transmitted to the server computer 1. If an ID has been input and transmitted (S3:YES), the program proceeds to S4. In S4, the database management portion 6 extracts, from the customer database 7, customer's personal information and stamp content information from the past orders of the customer that correspond to the ID input in S3. Examples of stamp content information include type of stamp, content of character trains in the stamp face, ink color, and font. Examples of customer's personal information include name, address, telephone number, and email address.

In S5, the review image preparation portion 5b of the image data preparation portion 5 prepares, based on the stamp content information extracted in S4, a review image that reproduces the stamp face of a stamp that the customer with the input ID has ordered in the past. Also, the preview image preparation portion 5a of the image data preparation portion 5 prepares a plurality of unique sample images showing different types of stamps. Each sample image includes, on the stamp face, the personal information that was extracted for the customer with the input ID. The unique sample images prepared in S5 can be prepared with a representative ink color and font. For example, black ink could be used as the ink color and *Mincho* could be used as the font.

In S6, an HTML file for displaying the unique sample image and review image and having tags for attaching the unique sample images and the review image is retrieved from the Web page database 8. The HTML file is transmitted from the transmission portion 2 to the computer 20 along with the unique sample images and the review image prepared in S5. At this time, the unique sample images and the review image attached to the HTML file function as buttons for selecting one of the displayed stamp types. When the customer of the computer 20 mouse clicks on one of the attached images using a mouse, then the stamp type shown in the image is selected.

Next, in S7 the input data analyzing portion 3a judges whether or not one of the unique sample images and the review image for each stamp type attached to the HTML file transmitted in S6has been mouse click at the computer 20. If none of the images where mouse clicked (S7:NO), then S7 is repeated. If one of the unique sample images is mouse clicked (S7:YES), then the program proceeds to S8. If the review image is mouse clicked, then it is judged that the customer wishes to order a stamp with the stamp face in the review image, and so the program proceeds to S15 (to be described later) without performing processes for inputting information about the stamp face.

In S8, the database management portion 6 extracts, from the customer database 7, the customer's personal information associated with the ID that was input in S3. The personal information could be information about an individual or about a group of individuals, such as a company. When the customer is an individual, then the customer's personal information can include the customer's name, address, postal code, telephone number, facsimile number, email address, and name, department, and title at the company where employed. When the customer is a group of individuals, the customer's personal information can include the name, address, postal code, telephone number, facsimile number and the like of the group.

In S9 the customer's personal information extracted in S8 is transmitted to the output data generation portion 3b of the Web management portion 3. Further, in S9 the output data generation portion 3b prepares a file of the stamp face information input HTML file, which was retrieved from the database management portion 6 from the web page database 8, with input spaces filled in, in a rewritable manner, with the customer's personal information extracted in S8. In S10, the stamp face information input HTML file prepared in S9 is transmitted to the computer 20 by the transmission portion 2.

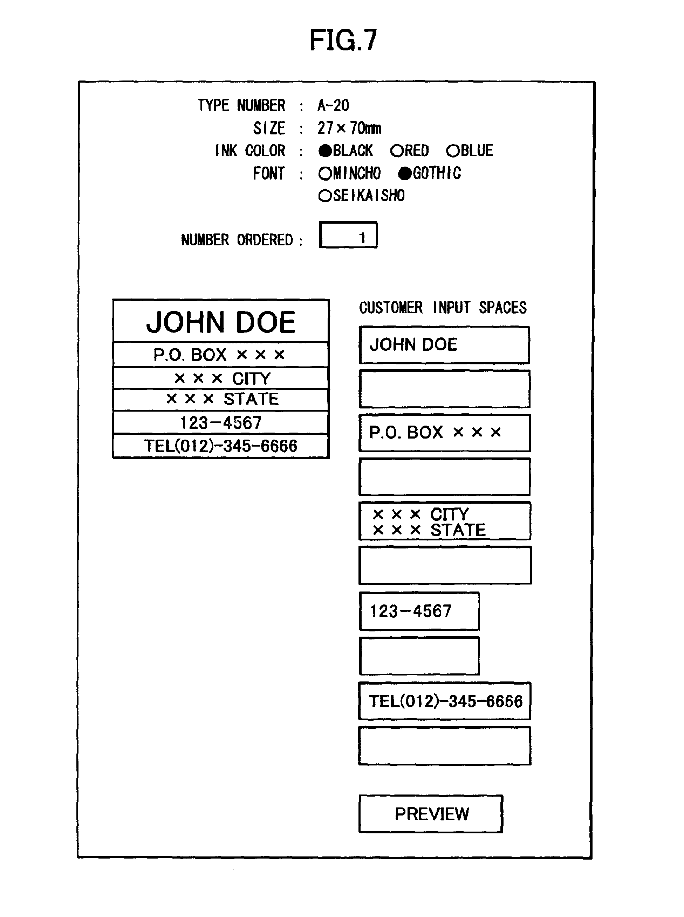

Fig. 7 shows an example of a screen displayed using the browser of the stamp face information input HTML file, which was extracted from the web page database 8 in S9. As shown in Fig. 7, according to the present embodiment the type number and the size of the selected stamp are already displayed in the screen for inputting stamp face information. In addition, dot buttons for selecting ink color, dot buttons for selecting font, a space for inputting the number of stamps desired to be ordered, a stamp face sample, and a preview button are displayed. Also blank spaces for inputting characters of the stamp face are provided each below display of an example. These spaces include a name space, two spaces for the address, a postal code space, and a telephone number space.

It should be noted that, although the spaces for inputting characters of the stamp face are indicated in Fig. 7 as being blank, actually the spaces will already be inputted with the customer's name, address, and the like in the file actually sent to the customer. Accordingly, if there is no need to change the content of the character trains on the print surface, the customer merely mouse clicks the preview button. If there is a need to change the content, the user rewrites the input spaces for the content of character trains and mouse clicks the preview button. When the preview button is mouse clicked, data indicating this is transmitted to the server computer 1 along with the HTML file transmitted to the customer in S10.

In S11, the input data analyzing portion 3a of the web management portion 3 judges whether or not the preview button displayed on the stamp face information input screen has been mouse clicked. If the preview button has not been mouse clicked (S11:NO), then S11 is repeated. If the preview button was mouse clicked (S11:YES), then the program proceeds to S12.

In S12, the input analyzing portion 3a analyzes the data input in the HTML file transmitted to the customer in S10. The preview image preparation portion 5a of the image data preparation portion 5 prepares, based on the analyzed input data, a preview image showing the stamp face of the stamp to be ordered by the customer this time. The preview image reflects the font, ink color, and content of the stamp face character rows that were input using the screen for inputting stamp face information. Then the program proceeds to S13. In S13, an HTML file with a tag for appending the preview image prepared in S12 is retrieved from the web page database 8 and transmitted from the transmission portion 2 to the computer 20 along with the preview image.

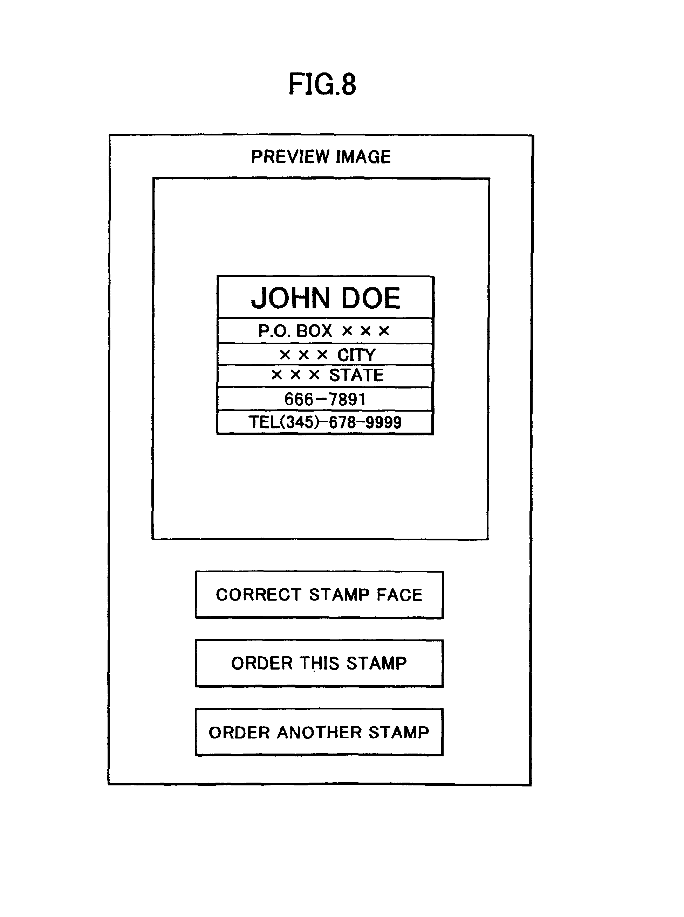

Fig. 8 shows an example of a preview display screen displayed using the browser based on the HTML file for displaying the preview image that was prepared in S12 and that was appended to the HTML file. As shown in Fig. 8, according to the present embodiment, the preview display screen displays a button for correcting the stamp face, a button for ordering the stamp, and a button for ordering another stamp, in addition to the preview image.

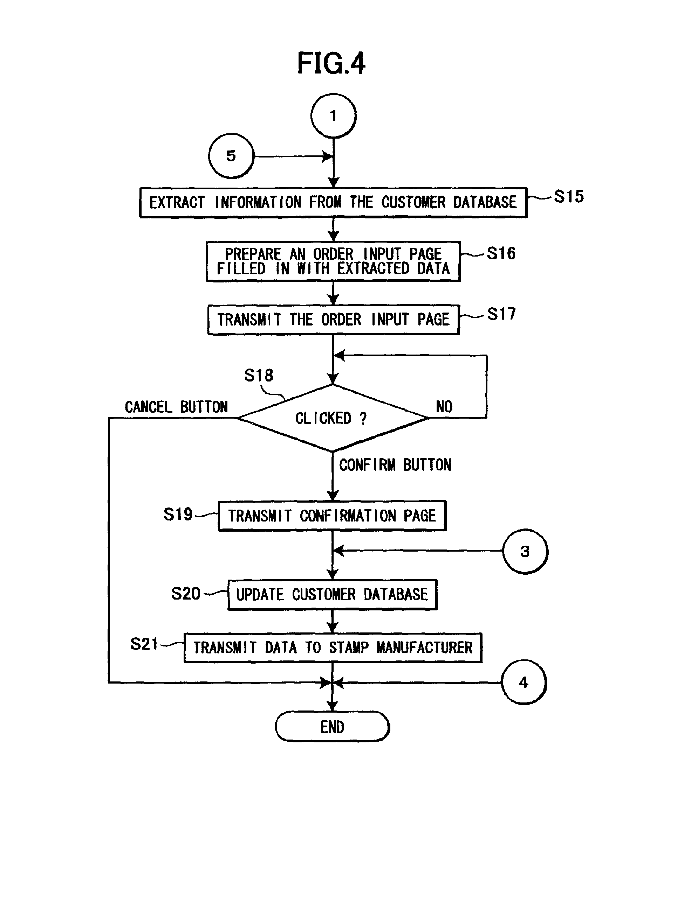

In S14, the input analyzing portion 3a judges whether one of the three buttons displayed on the preview display screen has been mouse clicked. When it is judged that the button for ordering a different stamp was selected, then the program returns to S4 and the same procedures are repeated. When it is judged that the button for correcting the stamp face was selected, then the routine returns to S10 and the HTML file for inputting stamp face information is again transmitted to the computer 20. If the button for ordering the stamp shown in the preview image is mouse clicked, then the program proceeds to S15 of Fig. 4.

In S15, the database management portion 6 extracts, from the customer database 7, the customer's personal information that corresponds to the ID input in S3. When the customer is an individual, then the database management portion 6 extracts the customer's name, address, postal code, and telephone number. When the customer is a company, the database management portion 6 extracts the name, address, postal code, and telephone number of the company.

In S16, the customer's personal information that was extracted in S15 is transmitted to the output data generation portion 3b of the web management portion 3. The output data generation portion 3b prepares an order information input HTML file extracted from the web page database 8 by the database management portion 6, with input spaces for the addressee and for the person that is ordering the stamp filled in, in a rewritable manner, with the customer's personal information that was extracted in S15.

In S17, the order information input HTML file generated in S16 is transmitted to the computer 20 by the transmission portion 2. The browser 21 operates to display an order information input screen based on the transmitted file. The order information input screen includes a preview image showing the stamp face of the ordered stamp, text describing the method of paying for the stamp, the cost of the stamp, a button for confirming the order, and a button for canceling the order. If the customer sees no need to change the addressee, the customer mouse clicks the order confirmation button without changing the content of the space for inputting addressee. If the customer feels the need to change the addressee, then the customer rewrites the space for inputting the addressee and then mouse clicks the order confirmation button. Once the order confirmation button has been mouse clicked, data indicating this is transmitted to the server computer 1 along with the order information input HTML file that was transmitted in S17.

In S18, the input data analyzing portion 3a judges whether or not one of the two buttons displayed on the order information input screen, that is, the order confirmation button or the order cancellation button, has been mouse clicked. If nether button has been mouse clicked (S18:NO), then S18 is repeated. If the order cancellation button has been mouse clicked, then this order is cancelled and the top page is resent to the computer 20. If the order confirmation button is mouse clicked, then the program proceeds to S19.

In S19 the database management portion 6 retrieves, from the web page database 8, an HTML file for displaying a screen that indicates that the order of the stamp has been confirmed. The transmission portion 2 transmits the HTML file to the computer 20. Next, in S20 the database management portion 6 rewrites, based on the content of this order, the portion of the customer database associated with the ID of the order.

In S21, the transmission email generation portion 4b of the email management portion 4 generates an email message addressed to the stamp manufacturer computer 30. The email message includes information on the content of the stamp face ordered this time. The prepared email message is transmitted to the computer 20 by the transmission portion 2 over the Internet 40.

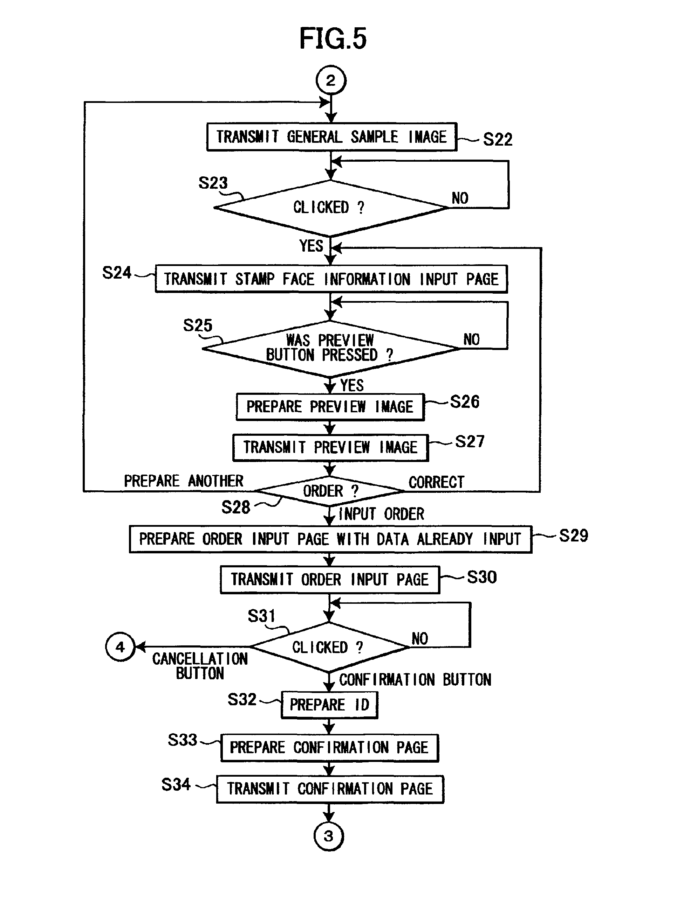

On the other hand, if it is judged in S3 that an ID has not been input and transmitted(S3:NO), then the program proceeds to S22 of Fig. 5. In S22, the transmission unit 2 transmits general sample images and an HTML file for displaying the general sample images to the computer 20. The general sample images were extracted from the stamp type database 9 for each stamp type. The HTML file was retrieved from the web page database 8 by the database management portion 6 and includes tags for attaching the general sample images.

Next, in S23 the input data analyzing portion 3a judges whether or not any of the general sample images for the stamp type appended to the HTLM file transmitted in S23 was mouse clicked. If none of the general sample images were mouse clicked (S23:NO), then S23 is repeated. If one of the general sample images was mouse clicked on (S23:YES), then the program proceeds to S24.

In S24, the database management portion 6 retrieves the stamp information input HTML file from the web page database 8 and the transmission portion 2 transmits the HTML file to the computer 20.

In S25, the input data analyzing portion 3a judges whether the preview button of the stamp face information input screen was mouse clicked. If the preview button was not mouse clicked (S25:NO), then S25 is repeated. If the preview button was mouse clicked (S25:YES), then the program proceeds to S26.

In S26, the input data analyzing portion 3a analyzes any data that was input to the file transmitted to the customer in S24. The preview image preparation portion 5a of the image data preparation portion 5 prepares, based on the analyzed input data, a preview image showing the stamp face of the stamp that the customer is considering for order this time. Then the program proceeds to S27, whereupon the transmission portion 2 transmits an HTML file attached with the preview image prepared in S26 to the computer 20.

In S28 the input data analyzing portion 3a judges whether one of the three buttons displayed on the preview display screen was mouse clicked. If the button for ordering another stamp was mouse clicked, then the program returns to S22 and repeats processes for ordering a stamp. If the button for correcting the stamp face was mouse clicked, then the program returns to S24, whereupon the stamp face information input HTML file is again transmitted to the computer 20 along with the data that was already input. If the order button was mouse clicked, then the program proceeds to S29.

In S29, the personal information that was input using the stamp face information input screen transmitted in S24 is transmitted to the output data generation portion 3b of the web management portion 3. Further, the output data generation portion 3b prepares a file for displaying the stamp face information input HTML file, which was retrieved by the database management portion 6 from the web page database 8, with the input spaces for the name and address of the orderer of the stamp filled in, in a rewritable manner, with the personal information input into the print face input screen during preparation of the preview image.

In S30, the order information input HTML file prepared in S29 is transmitted to the computer 20 by the transmission portion 2. In S31, the input data analyzing portion 3a judges whether or not either of the two buttons displayed on the order information input screen, that is, the order confirmation button or the order cancellation button, was mouse clicked on using the mouse of the computer 20. If neither button was mouse clicked (S31:NO), then S31 is repeated. If the order cancellation button was mouse clicked, then this purchase is cancelled and the top page is transmitted to the computer 20. If the order confirmation button is mouse clicked, then the program proceeds to S32.

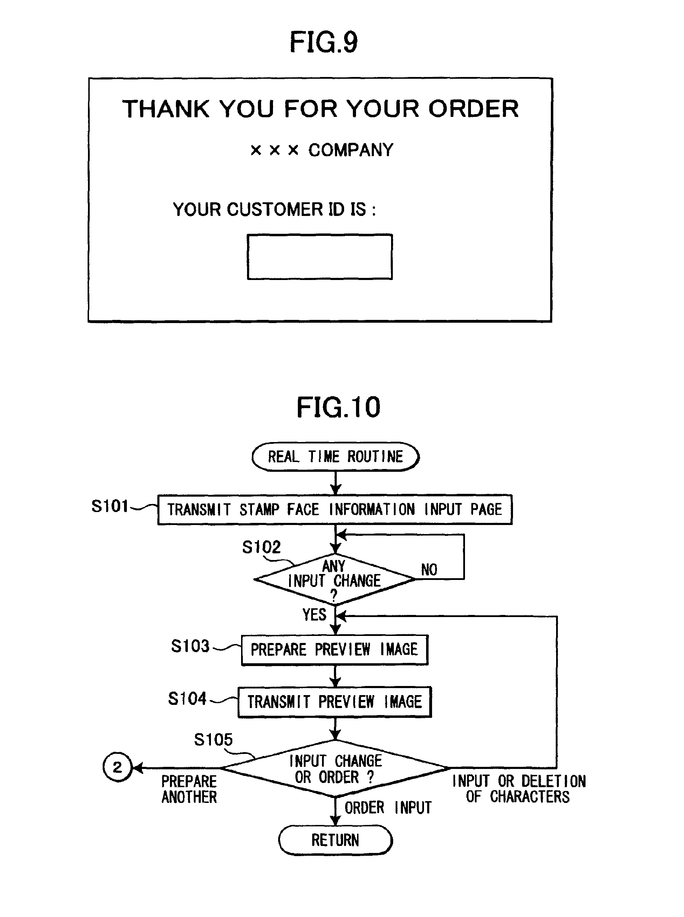

In S32, the database management portion 6 prepares a new ID for the customer of the present order, that is, the person's name that was input into the orderer input space of the order information input screen. In S33, the database management portion 6 retrieves, from the web page database 8, the HTML file for confirming that the order for the stamp has been received. The output data generation portion 3b rewrites the order confirmed HTML file to include the ID that was prepared in S32. In S34, the transmission portion 2 transmits the rewritten order confirmed HTML file to the computer 20. As shown in Fig. 9, the browser 21 operates to display the transmitted order confirmed HTML file to include the newly issued ID. Afterward, the program proceeds to S20 of Fig. 4 and the customer information and the order information of this first order are written, along with the ID, into the customer database 7 shown in Fig. 2 by the database management portion 6.

According to the embodiment, the customer can decide to purchase the stamp after confirming, using the browser 21, the preview image that shows the stamp face of the stamp the customer is about to purchase. Accordingly, a stamp with a stamp face that differs greatly from the image that the customer had of the stamp face will not be delivered. The customer can order stamps over the Internet with a feeling of security. This greatly increases convenience of purchasing stamps over the Internet.

The preview image is prepared and transmitted to the computer 20 after the customer clicks on the preview button to request transmission of a preview image. Therefore, the data for displaying the preview image is transmitted between computer 1 and the computer 20 one time after the stamp face information is input. Accordingly, not much time is required to transmit the data for the preview image even if the server computer 1 and the computer 20 communicate at a low transmission rate. Therefore, the customer will not feel frustrated.

According to the embodiment, when a customer inputs an ID during the process of ordering a stamp, the browser 21 operates to display a preview image, such as a unique sample image, that indicates the stamp face with personal information of the customer having the input ID. This greatly reduces the labor required of the customer to input the stamp face using the keyboard.

According to the embodiment, when a customer with no ID makes an order, the database management portion 5 issues an ID and notifies the customer of this ID. This facilitates orders for the customer the next time.

It should be noted that according to the embodiment, when the computer 20 was used to purchase a stamp from the server computer 1 in the past, the server computer 1 can transmit, to the computer 20, a data file called a cookie that functions as an identifier for the computer 20. The computer 20 stores the cookie. If the cookie is used instead of an ID as an identifier, the customer need not go to the trouble of inputting the ID.

According to the embodiment, the browser 21 can operate to display a reproduction of a stamp ordered in the past, in the form of a review image of the stamp face, based on information about a stamp that was ordered in the past. Therefore, customer can refer to the layout of a stamp purchased in the past when designating the content of a new product to purchase. Further, according to the embodiment, because the browser 21 operates to display a review image and a unique sample image of the stamp face, the customer can easily determine the content of the product to be newly purchased. It should be noted that a stamp type and the like of a stamp desired to be purchased can be input in advance. With this configuration, the browser 21 can operate to display a review image and a preview image.

According to the embodiment, when an ID is input, the information extracted from the customer information stored in the customer database 7 is used as information indicating a review image, information indicating a preview image, and personal information about the addressee and the orderer inputted in the order information input screen. On the other hand, when no ID is input, the personal information input into the print face input screen is used as the personal information about the addressee and the orderer inputted in the order information input screen. Therefore, there is no need for the customer to input redundant information and the amount of trouble that the customer needs to go through to input characters using the keyboard is greatly reduced.

It should be noted that mutually linking and using the data input from the keyboard and/or data stored in the customer database 7 can be performed in other situations as well. For example, when the ID is input then the personal information, for either of the orderer and the addressee, that was input into the order information input screen can be used as the personal information input into the stamp face information input screen. Or when no ID is input, the personal information for the orderer that was input into the order information input screen can be used as the personal information that is input into the stamp face information input screen or the personal information of the addressee that is input into the order information input screen.

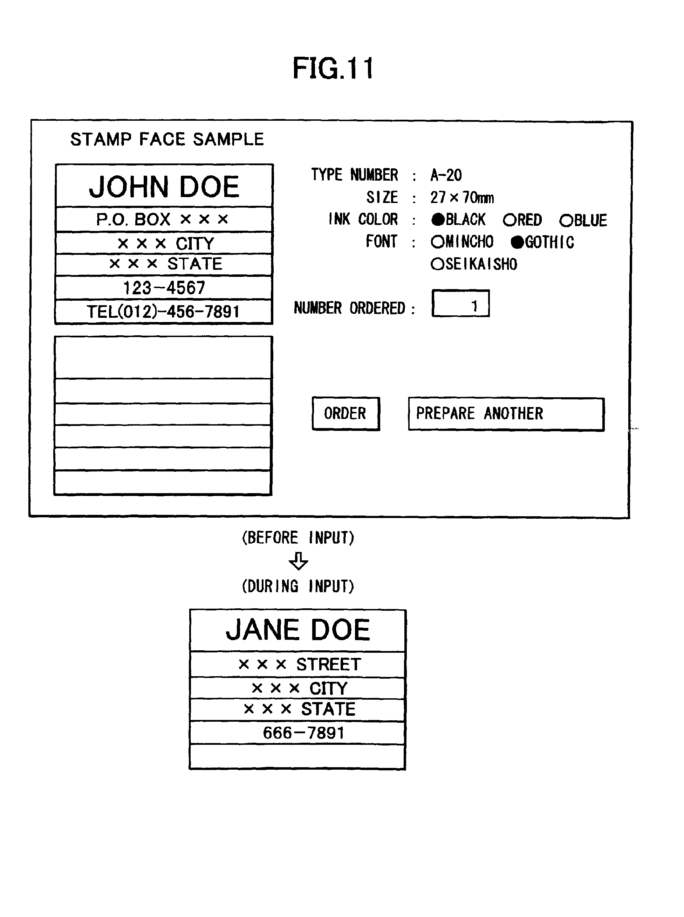

Next, a modification of the embodiment wherein the preview image is prepared in real time will be explained based on Figs. 10 and 11. Fig. 10 is a flowchart representing processes performed by the server for selling stamps according to the modification. Fig. 11 is a schematic view showing an example of a screen displayed by operation of the browser 21 of client during the stage of stamp purchase for inputting information about the stamp face. It should be noted that because the modification differs from the embodiment mainly at the portion that corresponds to S10 to S14 of Fig. 3 and S24 to S28 of Fig. 5. Therefore, Fig. 10 only shows the different portions and explanation of other portions will be omitted. Although the flowchart of Fig. 10 only shows processes performed when the ID is not input in S3, that is, in the process that corresponds to S24 to S28, substantially the same processes are performed when an ID is input.

First, in S101 the database management portion 6 retrieves, from the web page database 8, an HTML file for a print face information input (Fig. 11). The transmission portion 2 transmits the HTML file to the computer 20. According to the modification, a plug in capable of real time processing is incorporated into the browser 21 of the computer 20 in order to display preview images in real time.

The screen displayed by operation of the browser using the HTML file shown in Fig. 11 enables direct input of characters relating to the print face layout information into the layout of the stamp type selected in S22 and S23. Also, the screen differs from that shown in Fig. 7 by including an order button and a prepare another stamp button, instead of the preview button.

Next, in S102, the input data analyzing portion 3a of the web management portion 3 judges whether or not there has been a change in the content of the stamp face information input screen other than the number of stamps to be ordered. That is, the input data analyzing portion 3a judges whether or not characters have been input or deleted, or whether a different ink color or font has been designated. If there has been no change in the input content (S102:NO), then S102 is repeated. If there has been a change in the input content (S102:YES), then the program proceeds to S103.

In S103 the input data analyzing portion 3a analyzes data input into the HTML file for the stamp face information input screen. Based on the analyzed input data, the preview image preparation portion 5a of the image data preparation portion 5 prepares a preview image including the stamp face of the stamp that the customer is considering to order this time. The preview image reflects the font, ink color, and content of character trains input using the print face information input screen. The program proceeds to S104, whereupon the transmission portion 2 transmits the preview image prepared in S103 to the computer 20. The browser 21 of the computer 20 operates to display a preview image that shows the stamp face changing in real time response to changes in input content. There is no need for the customer to perform some special operation such as mouse clicking on a preview button.

The program proceeds to S105, whereupon the input data analyzing portion 3a judges whether or not there has been a change in the content of the stamp face information input screen other than the number of stamps to be ordered and whether or not either of the two buttons displayed on the stamp face information input screen has been mouse clicked. When it is judged that input content has been changed, then the routine returns to S103 and the same real time processes are repeated. The changed preview image is transmitted to the computer 20 in S104.

If the button for ordering another stamp is mouse clicked on, then the routine returns to S22 of Fig. 4 and the processes are repeated in the same order. If the button for ordering the stamp is mouse clicked on, then the routine proceeds to S29 of Fig. 5.

According to the modification, the customer merely needs to input changes in content of input characters and the browser 21 of the computer 20 operates to display a preview image in real time. There is no need for the customer to perform some special operation such as clicking with a mouse. The purchaser can automatically confirm the preview image that corresponds to input characters. This aspect of the present invention is particularly effective when the server and the client devices are connected by a connection with a high transmission speed.

Although Fig. 11 shows the spaces for input stamp face content as being blank spaces, when an ID is input in S3, a stamp face input HTML file for displaying a preview image with spaces filled in from the start with the customer's name, address, and the like may be transmitted to the computer 20.

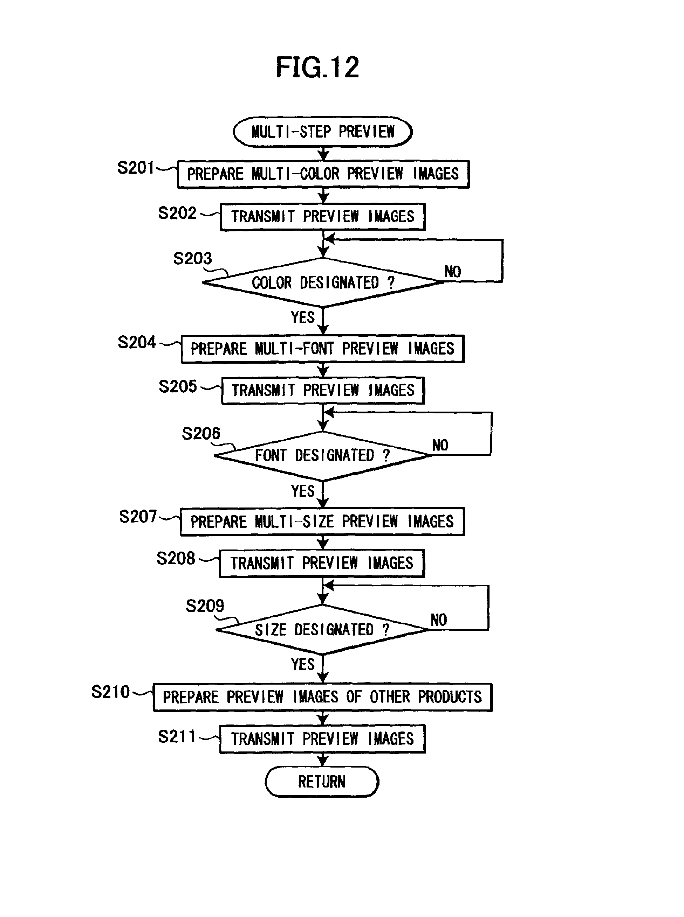

Another modification of the embodiment will be explained with reference to Fig. 12. In this modification, plural sets of preview images are displayed for ink colors, fonts, and sizes. Fig. 12 is a flowchart representing processes performed by the server according to the method of selling stamps according to the modification. It should be noted that the processes according to the present modification differ from corresponding portion of the above-described embodiment from S12 to S13 of Fig. 3 or from S26 to S27 of Fig. 5 and that the stamp face information input screen is displayed without the buttons for selecting font and ink color. Therefore, Fig. 12 shows processes relating only to these differing portions. Explanation of common portions will be omitted. Also, processes according to the present modification are substantially the same when an ID is input and when an ID is not input in S3.

In S210 the input data analyzing portion 3a analyzes the stamp face character train content data input in the HTML file that was transmitted to the customer in S10 or S24. Based on the analyzed input data, the preview image preparation portion 5a of the image data management portion 5 prepares preview images showing the stamp face of the stamp that the customer ordered this time. The preview images reflect content of the print face characters input using the print face information input screen and use a representative font, such as *Mincho* font. Preview images are produced in a number (for example, for three types of black, red, and blue) as the number of colors in which stamps can be produced.

In S202 the database management portion 6 retrieves, from the web page database 8, an HTML file with tags for attaching the preview images prepared in S201. The transmission portion 2 transmits the HTML file along with the three preview images to the computer 20. The browser 21 of the computer 20 operates to display the preview images showing the same stamp face with the same character trains in the same font, but with the character trains displayed in a different color in each preview image.

Next, in S203 the input data analyzing portion 3a repeatedly judges whether one of the different-color preview images has been mouse clicked. If none of the preview images was selected the program repeats S203. If one of the preview images was mouse clicked to designate an ink color, then the program proceeds to S204.

In S204 the preview image preparation portion 5a of the image data preparation portion 5 prepares a plurality of preview images that all reflect the stamp face character train content input using the print face information input screen and the ink color designated by a mouse click in S203. However, each preview image shows the character trains in a different font that the stamps can be manufactured in (for example, the three different fonts of *Mincho,* Gothic, and *Seikaisho*).

The program proceeds to S205, whereupon an HTML file with tags for attaching the preview images prepared in S204 is retrieved from the web page database 8. The transmission portion 2 transmits the HTML file along with the preview images that show the different fonts to the computer 20. The browser 21 of the computer 20 operates to display the preview images with the same character trains in the same ink color, but in a plurality of fonts.

In S206 the input data analyzing portion 3a repeatedly judges whether or not one of the different-fonted preview images displayed on the multi-font preview display screen that was transmitted in S205was mouse clicked on at the computer 20. If none of the preview images were mouse clicked, then S206 is repeated. If one of the preview images with a designated font was mouse clicked, then the program proceeds to S207.

In S207 the preview image preparation portion 5a of the image data preparation portion 5 prepares a plurality of preview images that all reflect the stamp face character train content that was input using the print face information input screen, the color designated by a mouse click in S203, and the font designated by a mouse click in S206. The preview images are prepared in a number that corresponds to the number of sizes in which the stamp face can be produced. It should be noted that the preview images prepared up to now reflect the stamp face size in the layout selected in S7 or S23. However, preview images are prepared with the same ratio between vertical and horizontal dimensions, but magnified or reduced, to show all the stamp face sizes that stamps can be produced in.

The program proceeds to S208, whereupon an HTML file including tags for attaching the preview images prepared in S207 is retrieved from the web database 8. The transmission portion 2 transmits the HTML file along with the different-sized preview images to the computer 20. The browser 21 of the computer 20 operates to display the preview images with the same character trains on the stamp face, in the same color ink and the same font, but in different sizes. At this time, the browser 21 displays check boxes and an order button next to each preview image. The check boxes are for the customer to indicate whether he or she wishes to purchase one or more stamps.

In S209 the input data analyzing portion 3a repeatedly judges whether the order button displayed in the multi-size preview display screen transmitted in S208 was mouse clicked. If the order button was not mouse clicked, then S209 is repeated. If the order button was mouse clicked, then the input data analyzing portion 3a judges which check box was checked and then the program proceeds to S210.

In S210 the preview image preparation portion 5a of the image data preparation portion 5 uses the information input up to now to prepare one or more preview images of one or more other products (for example, a business card or tag) that can be ordered through the computer 1.

The program proceeds to S211, whereupon the database management portion 6 retrieves, from the web page database 8, an HTML file that includes tags for attaching the preview images prepared in S210. The transmission portion 2 transmits the retrieved HTML file along with the preview images of other products to the computer 20. The browser 21 of the computer 20 operates to display the preview images of the products other than stamps. It should be noted that selection of the ink color, layout, font, and the like may be enabled for these other products as well.

According to this modification, preview images can be displayed showing a stamp face in different ink colors, fonts, and sizes. Therefore, the customer can more reliably confirm the status of the stamp face before purchasing a stamp. The customer will be able to purchase stamps with greater peace of mind. According to the present modification, preview images of different types of products other than stamps, such as business cards, can be displayed. This urges customers to buy different products.

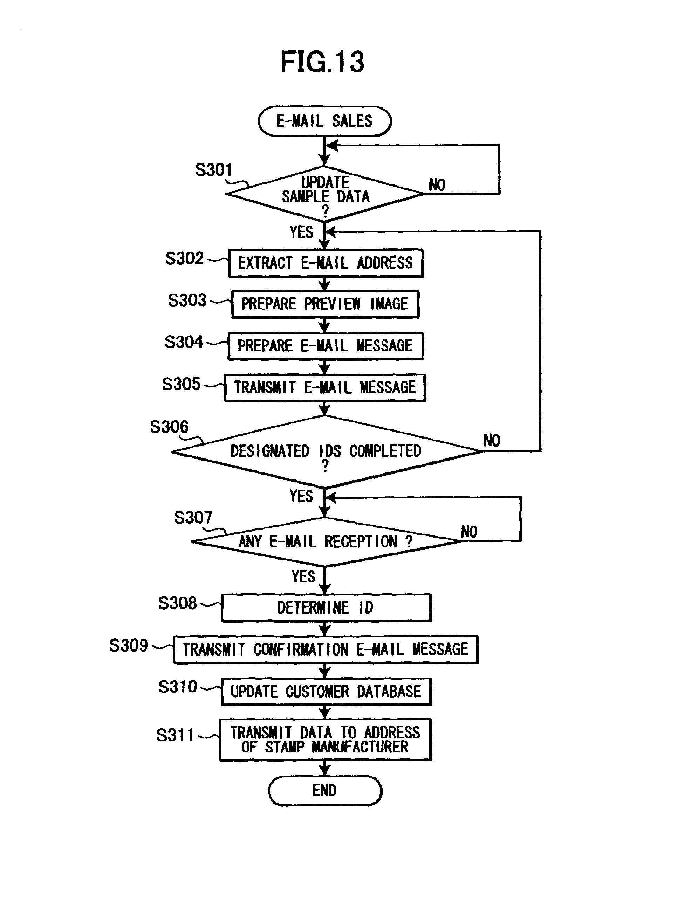

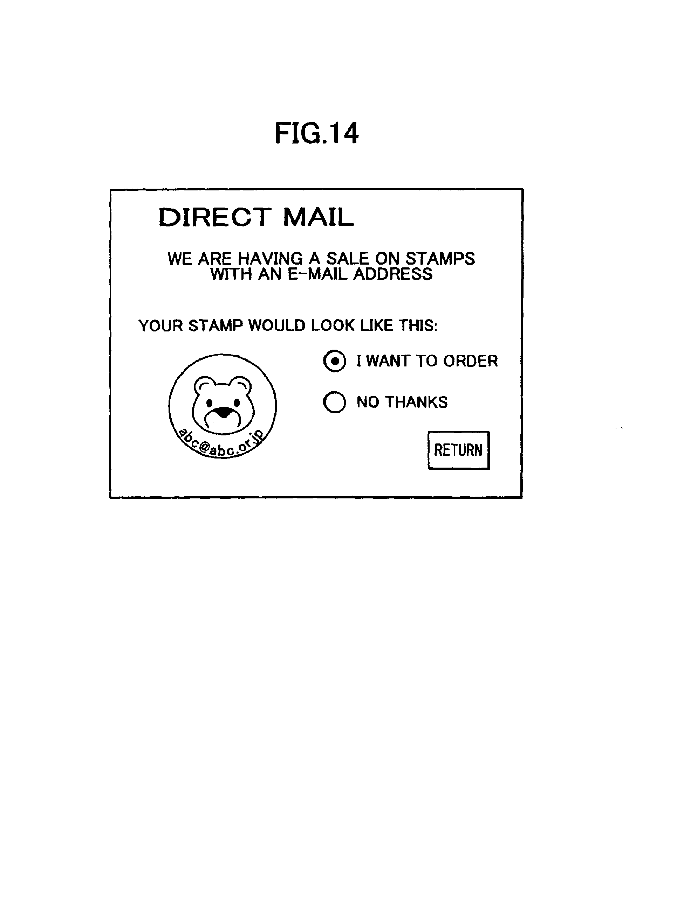

Next, the situation wherein the sales system of the embodiment is used for direct mail sales of stamps will be described while referring to Figs. 13 and 14. Fig. 13 is a flowchart representing operations performed by the server according to the stamp sales method of the embodiment. Fig. 14 is a view showing a screen displayed by a client mailer of the embodiment. It should be noted that the direct mail sales are performed according to the present embodiment with respect to customers that have been issued an ID.

In S301 the database management portion 6 judges whether the stamp type database 9 has added with any new stamp designs from the stamp seller. If there have been no additions to the stamp type database 9 (S301:NO), then S301 is repeated. If it is judged that there has been an addition to the stamp type database 9 (S301:YES), then the program proceeds to S302.

In S302 the email address of a customer to which the direct email message is to be sent and information required for the added stamp design, such as name and address, is extracted from the customer database 7. Direct email messages need not be sent to all customers registered in the customer database 7, but can instead be sent only to customers that match predetermined conditions, such as address, age, and the number of items purchased in the past.

The program proceeds to S303, whereupon the preview image preparation portion 5a of the image data preparation portion 5 uses the information extracted from the database to prepare preview images for the added stamp design. The stamp can include at least one of the customer's email address, name, and telephone number.

In S304 the transmission email generation portion 4b of the email management portion 4 prepares an email message directed to the email address associated with each ID. The email messages include the preview image prepared in S303. In S305, the transmission portion 2 transmits the prepared email messages to the email addresses.

The mailer 22 of a customer that received the email messages displays the email message as shown in Fig. 14 to include a preview image of the new stamp design, dot buttons for ordering the new stamp, and a return button. Accordingly, customers who desire to purchase the new stamp select the dot button labeled "I WANT TO ORDER" and then mouse clicking on the return button to transmit an email message to the computer 1 that indicates the customer's desire to purchase.

In S306 it is determined whether email messages have been transmitted to all customers with a selected ID. If not (S306:NO), then the program returns to S302 and repeats the same processes. If all email messages have been sent (S306:YES), then the program proceeds to S307.

In S307 the received email analyzing portion 4a of the email management portion 4 judges whether an email message has been received based on POP. If there are no received email messages (S307:NO), then S307 is repeated. If an email message is received (S307:YES), then the program proceeds to S308.

In S308 the received email analyzing portion 4a uses the email address of the received email message, while referring to the customer database 7, to designate a customer ID that corresponds to the received email message.

Next in S309 the transmission email generation portion 4b uses the email file stored in the web page database 8 to prepare an email message for confirming the order. The prepared email message is transmitted to the email address designated in S308.

Next in S310 the database management portion 6 rewrites the portion of the customer database relating to the ID of the customer that ordered the product, based on the content of the order placed for the direct email sale.

In S311 the transmission email generation portion 4b of the email management portion 4 generates an email message addressed to the computer 30 of the stamp manufacturer. The email message includes print face content information relating to the order placed this time. The transmission portion 2 transmits the prepared email message over the Internet 40 to the manufacturer computer 30, whereupon the message is displayed by operation of the mailer 32. It should be noted that an HTML file for displaying, on the browser 31, the stamp face information of the present order may be transmitted to the manufacturer computer 30 instead of sending an email message.

When an email sale is performed, the server prepares a preview image showing a stamp face with content that the server feels is suitable and transmits it to the customer in an email message, without the customer having to select ink color or character trains of the print face. Customers that desire to change the preview image in the transmitted email need to access the sales site on the web following normal sales procedures.

According to this embodiment, when a preview image showing a newly designed stamp is transmitted as an email message to customers stored in the customer database 7, the customer can easily order a stamp by pressing the displayed return button, without the need to view a catalog, access the web site for stamp sales, or input data into an order form. This stimulates the desire of customers to purchase more, which results in new demand for stamps.

While the invention has been described in detail with reference to preferred embodiments, the present invention is not limited to the above-described embodiment. Various changes are possible within the limits of the scope of the patent claims. For example, the present invention can be applied to a variety of unique information indicating products other than stamps or business cards.

### INDUSTRIAL APPLICABILITY

The present invention enables customers, sales people, and manufacturers to exchange tangible images using the Internet to quickly grasp a variety of information for each customer, such as designated name, address, and telephone number, or other designated marks, symbols, characters, of an individual or a company when used as the print face of a stamp device or in the print layout of a business card, a sticker, and the like, and so greatly contributes to production, sales, advertisement, and the like.

## Claims

1. In a unique information indicating product sales method for selling, using a transmission network, unique information indicating products that indicate unique information, a unique information indicating product sales method being **characterized by**:
preparing, based on unique information supplied from a client device across the transmission network to a server, a preview image of a unique information indicating product that indicates the unique information; and
transmitting the prepared preview image to the client device and displaying the preview image using a browser of the client device.

2. A unique information indicating product sales method as claimed in claim 1, **characterized by** the steps of preparing the preview image of the unique information indicating product and displaying on the browser of the client device are performed in real time in response to character input performed at the client device for the unique information.

3. A unique information indicating product sales method as claimed in claim 1, **characterized by** the steps of preparing the preview image of the unique information indicating product and displaying on the browser of the client device are performed in response to a preview reception request sent from the client device to the server.

4. A unique information indicating product sales method as claimed in any one of claims 1 to 3, **characterized by** displaying, on the browser of the client device, a plurality of preview images corresponding to different colors selectable as products.

5. A unique information indicating product sales method as claimed in any one of claims 1 to 4, **characterized by** displaying, on the browser of the client device, a plurality of preview images corresponding to different text fonts selectable as products.

6. A unique information indicating product sales method as claimed in any one of claims 1 to 5, **characterized by** displaying, on the browser of the client device, a plurality of preview images corresponding to product sizes selectable as products.

7. A unique information indicating product sales method as claimed in any one of claims 1 to 6, **characterized by** displaying, on the browser of the client device, preview images corresponding to different unique information indicating products selectable as products.

8. A unique information indicating product sales method as claimed in claim 1, **characterized by**:
the unique information including a customer identifier; and
the step of preparing the preview image including extracting, based on a customer identifier supplied from the client device, over the transmission network, to the server, unique information from a customer database that stores customer identifiers in correspondence with customer information, the unique information being for displaying the unique information indicating product, and displaying the extracted unique information in the preview image of the unique information display product.

9. A unique information indicating product sales method as claimed in claim 8, **characterized by**:
preparing a customer identifier and the preview image of the unique information indicating product displaying the unique information when unique information to be displayed on the unique information indicating product is supplied from the client device to the server, but a customer identifier is not supplied; and
transmitting the prepared preview image and the prepared customer identifier to the client device.

10. In a unique information indicating product sales method for selling, using a transmission network, unique information indicating products that indicate unique information, a unique information indicating product sales method being **characterized by**:
extracting, based on a customer identifier supplied from a client device over the transmission network to a server, past order information associated with the customer identifier from a customer database that stores customer identifiers in correspondence with customer information;
preparing, based on the past order information extracted from the database, a review image of a unique information indicating product ordered in the past; and
transmitting the prepared review image to the client device and displaying the review image on a browser of the client device.

11. A unique information indicating product sales method as claimed in claim 10, **characterized by** transmitting and displaying the review image along with at least one of a sample image of a unique information indicating product and a preview image of a unique information indicating product that indicates the unique information extracted from the customer database.

12. In a unique information indicating product sales method for selling, using a transmission network, unique information indicating products that indicate unique information, a unique information indicating product sales method being **characterized by**:
using order information for a unique information indicating product as unique information correspondence information for unique information to be indicated on the unique information indicating product or using unique information to be indicated on the unique information indicating product as unique information correspondence information for order information.

13. A unique information indicating product sales method as claimed in claim 12, **characterized by** using a portion of the unique information correspondence information in the order information for a unique information indicating product as at least one of unique information correspondence information for another portion of the unique information correspondence information of the order information and the unique information to be indicated on the unique information indicating product.

14. In a unique information indicating product sales method for selling, using a transmission network, unique information indicating products that indicate unique information, a unique information indicating product sales method being **characterized by**:
preparing a preview image of a unique information indicating product that indicates unique information that was extracted, based on a customer identifier, from a customer database that stores customer identifiers in correspondence with customer information; and
transmitting the prepared preview image in an email message to an email address associated with the customer identifier.

15. In a unique information indicating product sales system for selling, using a transmission network, unique information indicating products that indicate unique information, a unique information indicating product sales system being **characterized by**:
a client device and a server connected via a transmission network;
a preview image of a unique information indicating product that indicates the unique information being prepared, based on the unique information supplied from the client device over the transmission network to the server; and
being configured to transmit the prepared preview image to the client device and to display it on a browser of the client device.

16. A unique information indicating product sales system as claimed in claim 15, **characterized by** preparation of the preview image of the unique information indicating product and display on the browser of the client device being performed in real time in response to character input performed at the client device for the unique information.

17. A unique information indicating product sales system as claimed in claim 15, **characterized by** preparation of the preview image of the unique information indicating product and display on the browser of the client device being performed in response to a preview reception request from the client device to the server.

18. A unique information indicating product sales system as claimed in claim 15, **characterized by**:
the unique information including a customer identifier;
extracting, based on a customer identifier supplied from the client device, over the transmission network, to the server, unique information from a customer database that stores customer identifiers in correspondence with customer information, the unique information being for displaying the unique information indicating product;
preparing the preview image of the unique information indicating product indicating the unique information extracted from the customer database; and
transmitting the prepared preview image to the client device and displaying it on the browser of the client device.

19. A unique information indicating product sales system as claimed in claim 18, **characterized by** a customer identifier and a preview image of the unique information product indicating the unique information being prepared when unique information to be indicated on the unique information indicating product is supplied from the client device over the transmission network to the server, but a customer identifier is not supplied; and transmitting the prepared preview image and the customer identifier to the client device.

20. In a unique information indicating product sales system for selling, using a transmission network, unique information indicating products that indicate unique information, a unique information indicating product sales system being **characterized by**:
a client device and a server connected via a transmission network;
extracting, based on a customer identifier supplied from the client device to the server across the transmission network, information about past orders associated with the customer identifier from a customer database that stores customer identifiers in correspondence with customer information;
preparing, based on the information about past orders extracted from the database, a review image of a unique information indicating product ordered by a customer in the past; and
transmitting the prepared review image to the client device and displaying it on a browser of the client device.

21. A unique information indicating product sales system as claimed in claim 20, **characterized by** the prepared review image being transmitted to the client device along with at least one of a sample image of a unique information indicating product and a preview image of a unique information indicating unique information extracted from the customer database and displaying on the browser of the client device.

22. In a unique information indicating product sales system for selling, using a transmission network, unique information indicating products that indicate unique information, a unique information indicating product sales system being **characterized by**:
a client device and a server connected via a transmission network; and
using order information for a unique information indicating product as unique information correspondence information for unique information to be indicated on the unique information indicating product or using unique information to be indicated on the unique information indicating product as unique information correspondence information for order information.

23. A unique information indicating product sales system as claimed in claim 22, **characterized by** a portion of the unique information correspondence information in the order information for a unique information indicating product being used as at least one of unique information correspondence information for another portion of the order information and the unique information to be indicated on the unique information indicating product.

24. In a unique information indicating product sales system for selling, using a transmission network, unique information indicating products that indicate unique information, a unique information indicating product sales system being **characterized by**:
a client device and a server connected via a transmission network;
preparing a preview image of a unique information indicating product that indicates unique information extracted, based on a customer identifier, from a customer database that stores customer identifiers in correspondence with customer information; and
transmitting the prepared preview image as an email message to an email address associated with the customer identifier.

25. In a server used to sell, over a transmission network, unique information indicating products that indicate unique information, a server used to sell unique information indicating products being **characterized by**:
a preview image preparation means that prepares, based on unique information supplied over the transmission network from a client device, a preview image of a unique information indicating product that indicates the unique information; and
a transmission means that transmits the prepared preview image to the client device.

26. A server used to sell unique information indicating products as claimed in claim 25, **characterized by** preparation of the preview image of the unique information indicating product and transmission of the preview image being performed in real time response to character input performed at the client device for the unique information.

27. A server used to sell unique information indicating products as claimed in claim 25, **characterized by** preparation of the preview image of the unique information indicating product and transmission of the preview image to the client device being performed in response to a preview reception request sent from the client device to the server.

28. A server used to sell unique information indicating products as claimed in claim 25, **characterized by**:
the unique information including a customer identifier;
a customer database storing customer identifiers in correspondence with customer information;
being further provided with a unique information extracting means that extracts, from the customer database, unique information to be indicated on the unique information indicating product, based on a customer identifier supplied from a client device over the transmission network; and
the preview image preparation means preparing the preview image of the unique information indicating product to indicate the unique information extracted from the customer database.

29. A server used to sell unique information indicating products as claimed in claim 28, **characterized by**:
a customer identification preparation means being further provided that prepares a customer identifier stored in the customer database when unique information indicated on the unique information indicating product is supplied over the transmission network but a customer identifier is not supplied;
the preview image preparation means prepares the preview image of the unique information indicating product to indicate unique information when unique information to be indicated on the unique information indicating product is supplied over the transmission network from a client device; and
the transmission means transmitting the preview image and the customer identifier to the client device.

30. In a server used to sell unique information indicating products for selling, over a transmission network, unique information indicating products that indicate unique information, a server used to sell unique information indicating products being **characterized by**:
a customer database storing customer identifiers in correspondence with customer information;
an order information extracting means that extracts, from the customer database, information about past orders associated with a customer identifier supplied from a client device over the transmission network;
a review image preparation means that, based on the past order information extracted from the customer database, prepares a review image of a unique information indicating product ordered in the past by a customer; and
a transmission means that transmits the prepared review image to the client device.

31. A server used to sell unique information indicating products as claimed in claim 30, **characterized by** the transmission means transmitting, to the client device, the review image and at least one of a sample image of a unique information indicating product and a preview image of a unique information indicating product indicating unique information extracted from the customer database.

32. In a server used to sell unique information indicating products for selling, over a transmission network, unique information indicating products that indicate unique information, a server used to sell unique information indicating products being **characterized by**:
using order information for a unique information indicating product as unique information correspondence information for unique information to be indicated on the unique information indicating product or using unique information to be indicated on the unique information indicating product as unique information correspondence information for order information.

33. A server used to sell unique information indicating products as claimed in claim 32, **characterized by** a portion of the unique information correspondence information in the order information for a unique information indicating product being used as at least one of another portion of unique information correspondence information of the order information and the unique information to be displayed on the unique information indicating product.

34. In a server used to sell unique information indicating products for selling, over a transmission network, unique information indicating products that indicate unique information, a server used to sell unique information indicating products being **characterized by**:
a customer database storing customer identifiers in correspondence with customer information;
a preview image preparation means that prepares a preview image of a unique information indicating product that indicates unique information extracted based on a customer identifier stored in the customer database; and
an email message transmission means that transmits, as an email message, the prepared preview image to an email address corresponding to one of the customer identifiers.
